(19) Europäisches Patentamt
European Patent Office
Office européen des brevets

(11) Publication number: **0 126 820**
**B1**

(12) # EUROPEAN PATENT SPECIFICATION

(45) Date of publication of patent specification: **04.11.87**

(51) Int. Cl.$^4$: **C 04 B 35/58**

(21) Application number: **83303457.2**

(22) Date of filing: **15.06.83**

(54) **Silicon nitride sintered bodies and a method for producing the same.**

(30) Priority: **04.04.83 JP 57915/83**

(43) Date of publication of application:
**05.12.84 Bulletin 84/49**

(45) Publication of the grant of the patent:
**04.11.87 Bulletin 87/45**

(84) Designated Contracting States:
**DE FR GB IT SE**

(56) References cited:
**GB-A-2 035 981**
**US-A-4 025 351**

**JOURNAL OF MATERIALS SCIENCE, vol. 11, no. 6, June 1976, pages 1135-1158, Chapman and Hall Ltd., GB; K.H. JACK: "Review sialons and related nitrogen ceramics"**

**CHEMICAL ABSTRACTS, vol. 98, no. 4, January 1983, page 265, no. 21192c, Columbus, Ohio, USA**

(73) Proprietor: **NGK INSULATORS, LTD.**
**2-56, Suda-cho, Mizuho-ku**
**Nagoya-shi, Aichi 467 (JP)**

(72) Inventor: **Matsuhiro, Keiji**
**303 Takemi Mansion 37-1 Takemi-Cho, 4-Chome**
**Mizuho-Ku Nagoya City (JP)**
Inventor: **Matsui, Minoru**
**193 Aza-Imonoshihora Ohaza-Kamiyashiro**
**Idaka-Cho Meito-Ku Nagoya City (JP)**

(74) Representative: **Paget, Hugh Charles Edward et al**
**MEWBURN ELLIS & CO. 2/3 Cursitor Street**
**London EC4A 1BQ (GB)**

(56) References cited:

**CHEMICAL ABSTRACTS, vol. 98, no. 12, March 1983, page 293, no. 94382z, Columbus, Ohio, USA; J. BARTA et al.: "Pressureless sintering of silicon nitride"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 126 820 B1

**Description**

The present invention relates to silicon nitride sintered bodies and a method for producing the same.

In general, silicon nitride sintered bodies have superior mechanical properties at relatively high temperature compared with metals, so that these bodies have been recently of particular interest as structural materials for gas turbine parts, adiabatic engine parts, ball bearings for high temperature, parts for various high temperature furnaces and the like, for which operation at high temperature is sought.

For the production of prior silicon nitride sintered bodies, the following processes are known.

1) Silicon nitride powder is added to a sintering aid selected from the group consisting of MgO, $Al_2O_3$, $Y_2O_3$, $CeO_2$ and the like and the resulting mixture is sintered under ambient or high pressure in a non-oxidizing atmosphere.

2) A shaped body of Si powder is fired under nitrogen gas (reaction bonding process).

3) Alternatively, Si powder is mixed with a sintering aid, such as MgO, $Al_2O_3$, $Y_2O_3$ and the like and the resulting mixture is formed into a shaped body and then the shaped body is nitrided in nitrogen gas, after which the shaped body is additionally sintered at a higher temperature under ambient or high pressure in a non-oxidizing atmosphere.

However, the silicon nitride sintered bodies formed by these processes have various defects. The silicon nitride sintered parts obtained by a sintering process under ambient pressure, when used at a high temperature of about 1,400°C, have very poor durability because of the deficiency of strength at high temperature. The sintered bodies obtained by sintering under high pressure, that is a hot press process or a hot isostatic press process, have very difficult problems in respect of both the technique and cost of production of a large article, of a complicated shape in an article or in mass production.

US—A—4025351 describes a silicon nitride sintered body containing MgO and $Al_2O_3$ in total amounts ranging from 10 to 40% and relative amounts such that when heated alone they would form spinel. It is thought that the presence of spinel or spinel-like structures in the silicon nitride gives superior properties.

GB—A—2035981 discloses a silicon nitride-based sintering composition in which up to 6% of a densification aid comprising very finely ground MgO and $Al_2O_3$ is present. To maintain the mechanical properties of the product, it is recommended that the amount of this densification aid should be as small as possible. Crystal structures of the product are not mentioned.

The present invention aims to obviate the defects mentioned above and to obtain silicon nitride sintered bodies having excellent strength and creep resistance at high temperature and also to obtain a method for producing cheaply and easily silicon nitride sintered bodies by a sintering process under ambient pressure.

The present invention proposes that silicon nitride sintered bodies, which consist mainly of crystalline $Si_3N_4$ and preferably contain at least one of crystalline magnesium sialon and crystalline forsterite as the second phase, are obtained by sintering a mixture of $Si_3N_4$, MgO and $Al_2O_3$ in a specific ratio in nitrogen or an inert gas atmosphere under ambient pressure.

More specifically, the present invention provides a silicon nitride sintered body as set out in claim 1.

The invention also provides a method of producing a silicon nitride sintered body as set out in claim 5.

The invention will now be explained in more detail, and specific embodiments given by way of example, with reference to the accompanying drawings, wherein;

Figure 1 is a typical microstructure of Sample No. 7 of the examples of the invention, as observed by a transmission electron microscope;

Figure 2 is a ternary diagram showing the composition limit range of the present invention;

Figure 3 is a block diagram of a method for producing silicon nitride sintered bodies according to the present invention; and

Figure 4 shows the four point flexural strength from room temperature to 1,400°C of a silicon nitride sintered body of the present invention and that of a comparative example.

Silicon nitride sintered bodies of the present invention will be explained in more detail.

Figure 1 shows the microstructure of the present invention which is observed by a transmission electron microscope, in which 1 is $Si_3N_4$ crystal, 2 is magnesium sialon crystal and 3 is forsterite crystal. No glass is found at the boundary of crystals and it can be seen that the crystals are strongly bonded with one another. When the contents of Mg and Al in magnesium sialon crystal are respectively analyzed from each X-ray intensity and the ratio of x to y in the general formula $Mg_{x/2}Si_{6-y+x/2}Al_{y-x}O_yN_{8-y}$ is calculated therefrom, said ratio is more than 0.90.

As mentioned above, in the microstructure of the sintered body of the present invention, the grain boundary of $Si_3N_4$ crystal of the main component is constructed with magnesium sialon crystal and forsterite crystal as the second phase and the crystal grain boundary of $Si_3N_4$ is substantially completely crystallized into the second phase of magnesium sialon crystal, forsterite crystal and the like, whereby the sintered body of the present invention has excellent strength and creep resistance at high temperature.

In general, $Si_3N_4$ is very poor in sinterability. Therefore, in order to obtain a dense sintered body under ambient pressure, it is necessary to add a substance which promotes densification of $Si_3N_4$, such as a sintering aid which forms a liquid phase during the densification. Such a substance becomes a liquid phase at the initial stage of sintering and serves a very effective role for densifying $Si_3N_4$ but after completion of

sintering, said substance remains as glass in the crystal grain boundary resulting in lowering of the strength of the sintered body at high temperature.

However, the sintered bodies containing MgO and $Al_2O_3$ of the composition proposed in the present invention form a liquid phase consisting of Si, Mg, Al, O and N at the initial stage of sintering and the densification of $Si_3N_4$ is promoted by the aid of this liquid phase and the density of the sintered bodies is improved. Then the major part of the finally formed liquid phase is crystallized into magnesium sialon crystal and/or forsterite crystal and the amount remaining in glass form becomes very small.

The migration rates of the component ions of magnesium sialon crystal, forsterite crystal and the like are far lower than that of glass, so that even when stress is applied at high temperature, plastic deformation is hardly caused. Therefore, the sintered bodies of the present invention which contain one or more of these crystals in the crystal grain boundary of $Si_3N_4$ crystal and have substantially no glass, have unexpectedly improved strength and creep resistance at high temperature.

The sintered bodies of the present invention consist preferably of 93—65% by weight of $Si_3N_4$ crystal, 25—0.1% by weight of magnesium sialon crystal and/or 15—0.1% by weight of forsterite crystal and less than 1% by weight of glass and have a relative density of more than 95%, so that the strength and creep resistance at high temperature are excellent.

It is very important that the total amount of MgO and $Al_2O_3$ is more than 6% by weight and not more than 30% by weight. When this amount is less than 6% by weight, the densification of the sintered body is not adequate and the relative density is low and a practically useful strength cannot be obtained, while when this amount exceeds 30% by weight, the above described second phase is not satisfactorily crystallized and the amount of residual glass increases and the strength at high temperature is reduced so that such an amount is not preferable.

The reason why the weight ratio of $MgO/Al_2O_3$ is 4—19, is that when said ratio is less than 4 or more than 19, the crystallization of the second phase is insufficient and said phase remains in the form of glass and high strength at high temperature cannot be obtained.

The reason why the ratio of x to y in the composition of magnesium sialon crystal represented by the general formula $Mg_{x/2}Si_{6-y+x/2}Al_{y-x}O_yN_{8-y}$ $(0<x\leq y<8)$ is preferably equal to or larger than 0.9 but does not exceed 1, is that when x/y is less than 0.9, the stability of magnesium sialon crystal and forsterite crystal is not adequate and these crystals are readily glassified at high temperature.

A relative density of the sintered bodies of higher than 95% and a preferred four point flexural strength at 1,400°C in air higher than 300 MPa (30 kg/mm$^2$) are defined in order to provide the properties having substantially no open pores and the practically useful strength at high temperature which are necessary for the materials for mechanical parts to be used at high temperature.

Figure 2 shows the ternary diagram limiting the composition of the present invention.

A method for producing silicon nitride sintered bodies of the present invention is explained hereinafter in detail with reference to the block diagram shown in Figure 3. To a raw material powder of silicon nitride having high purity, which contains less than 2% by weight, preferably less than 1.5% by weight, of oxygen are added MgO and $Al_2O_3$ powders having high purity so that the total amount of MgO and $Al_2O_3$ is from 6% by weight to 30% by weight and the weight ratio of $MgO/Al_2O_3$ is 4—19. The resulting mixture is pulverized by a rotary mill, a vibratory mill, attrition mill or the like. The pulverizing step may be carried out by any wet process or dry process but in order to prevent the oxidation of $Si_3N_4$ as far as possible, the pulverizing medium may be benzene, xylene, ether and the like and it is further preferable that the vessel is filled with nitrogen gas.

The mixture is pulverized until it is thoroughly finely divided and then taken out from the vessel and dried and then the pulverized particles are granulated to obtain powder for shaping. In this case, if necessary, a shaping aid, such as polyvinyl alcohol and the like, which is a temporary thickener, may be added. This shaping powder is formed into desired shapes through hydrostatic press molding, extruding, injection molding and the like and then fired in nitrogen or an inert gas under ambient pressure. The firing temperature is 1,650—1,850°C, preferably 1,700—1,750°C for 0.2—2 hours.

The raw material powder of silicon nitride used in the present invention is preferred to be one in which the total amount of metal impurities is less than 1% by weight, the content of $\alpha$-$Si_3N_4$ is more than 80% by weight, preferably more than 90% by weight, BET specific surface area is 2—50 m$^2$/g, preferably 7—20 m$^2$/g and the average grain size is less than 5 µm, preferably less than 2 µm. MgO and $Al_2O_3$ are particularly preferred to have purity of more than 99% by weight, average grain size of less than 5 µm and BET specific surface area of 5—50 m$^2$/g but any compounds which can form MgO and $Al_2O_3$ through firing may be used, and for example, a hydrolyzate of alkoxide or a hydrate of alloy which has been adjusted to the given $MgO/Al_2O_3$ ratio may be used.

In the method for producing the sintered bodies of the present invention, it is most important that the oxygen content of the raw material powder of silicon nitride is not greater than 2% by weight. If said content exceeds 2% by weight, a substance consisting of $MgO$-$Al_2O_3$-$SiO_2$ ternary systems and having a low melting point is formed and the formation of magnesium sialon crystal and a forsterite crystal is prevented and the strength at high temperature is poor. The definition of the firing temperature of 1,650—1,850°C is based on the following reason. When the temperature is lower than 1,650°C, the sintering does not proceed satisfactorily and the density of the sintered bodies is low, while when the temperature exceeds 1,850°C, $Si_3N_4$ is decomposed and evaporates.

The total amount of metal impurities in the raw material powder of silicon nitride is preferred to be less than 1% by weight, because when the total amount of Fe, Ti, Ca, Na, K and the like, which are metal impurities, exceeds 1% by weight, these impurities react with $Si_3N_4$, MgO, $Al_2O_3$ and an amount of glass having a low melting point increases and the high temperature strength of the sintered bodies is lowered.

The preference of the content of $\alpha$-$Si_3N_4$ crystal in the raw material powder of silicon nitride being not less than 80% by weight is based on the following reason. When the content of $\alpha$-$Si_3N_4$ crystal in the raw material is less than 80% by weight, the strength of the sintered bodies may not reach the practically useful level. BET specific surface area of the raw material powder of silicon nitride is preferred to be 2—50 $m^2/g$, because when said specific surface area is less than 2 $m^2/g$, the sinterability is poor and the satisfactory densification cannot be obtained, while when said area is more than 50 $m^2/g$, the cohesive force of the powder becomes strong and the uniform mixing with MgO and $Al_2O_3$ powders becomes difficult.

The average grain size is defined to be no greater than 5 μm, because when the average grain size exceeds 5 μm, the sinterability is poor and the satisfactory densification cannot be obtained.

$Si_3N_4$ crystal and forsterite crystal in silicon nitride sintered bodies of the present invention are identified by X-ray diffractometry of powder and magnesium sialon crystal is identified by the fact that the crystal shows the lattice image inherent to magnesium sialon and contains Mg, Al and Si by the observation through transmission electron microscope provided with X-ray analyzer.

The composition x/y of magnesium sialon crystal is determined by the following formula

$$x/y=2R/(1+2R)$$

wherein R is the molar ratio of Mg/Al in the crystal and is measured by the thin film quantitative analyzing process using the Cliff-Lorimer model. The strength means the four point flexural strength following to JIS R-1601 "Testing Method for Flexural Strength (Modulus of Rupture) of High Performance Ceramics" and the creep resistance at high temperature means the creep rate at the 0.3% strain by applying a load of 200 MPa (20 $kg/mm^2$) at 1,200°C in air under the same condition as in the method for measuring the four point flexural strength.

The following examples are given for the purpose of illustration of this invention and are not intended as limitations thereof.

Example 1

To raw material powder of silicon nitride having oxygen content of 1.4% by weight, a total content of metal impurities of 0.9% by weight, BET specific surface area of 5.3 $m^2/g$ and an average grain size of 3.4 μm were added MgO and $Al_2O_3$ powders having purity of more than 98% by weight, BET specific surface area of 12 $m^2/g$, an average grain size of 2μm in the various mixing ratios shown in the following Table 1. 500 g of the resulting mixture, 1 kg of nylon coated grinding balls and 1,000 ml of benzene were charged in a plastic vessel of an inner capacity of 2 l and air in the vessel was purged with nitrogen gas and then pulverized by means of a rotary mill at 100 rpm for 300 hours. After the pulverizing, the slurry was dried in nitrogen gas at 90°C and the dried powder was passed through a sieve having an opening size of 300 μm to obtain shaping powder. This powder was pre-shaped under a pressure of 200 $kg/cm^2$ (20 MPa) into 60×60×7 (mm) and the pre-shaped body was covered with a rubber bag and subjected to hydrostatic press under a pressure of 2.5 $ton/cm^2$ (250 MPa). This shaped body was put in a crucible made of graphite having high purity and sintered under ambient pressure in nitrogen gas at the sintering temperature described in Table 1 for 30 minutes to obtain silicon nitride sintered bodies of the present invention according to Samples Nos. 1—11.

Comparative sintered bodies (No. 12—No. 19) which are not within the limited composition area of the present invention, were prepared under the same conditions as described above. With respect to all these sintered bodies, the relative density, the four point flexural strength, the creep rate in air at 1,200°C, the crystal phase and the like were measured for comparison. The obtained results are shown in Table 1. The temperature and the strength of an example of the present invention and a comparative example are shown in Figure 4. In the Tables, strengths are expressed in $kg/mm^2$. 1 $kg/mm^2$=9.8 MPa.

TABLE 1(a)

| | Sample No. | Mixing ratio (wt%) | | | $MgO+Al_2O_3$ (wt%) | $MgO/Al_2O_3$ (weight ratio) | Firing temperature (°C) | Relative density (%) |
|---|---|---|---|---|---|---|---|---|
| | | $Si_3N_4$ | MgO | $Al_2O_3$ | | | | |
| Present invention | No. 1 | 93.9 | 5.79 | 0.31 | 6.1 | 18.7 | 1,800 | 97.1 |
| | No. 2 | 80.0 | 19.0 | 1.0 | 20.0 | 19.0 | 1,750 | 97.2 |
| | No. 3 | 70.0 | 28.5 | 1.5 | 30.0 | 19.0 | 1,750 | 97.8 |
| | No. 4 | 93.9 | 5.5 | 0.6 | 6.1 | 9.2 | 1,800 | 96.9 |
| | No. 5 | 92.0 | 7.0 | 1.0 | 8.0 | 7.0 | 1,750 | 97.0 |
| | No. 6 | 84.5 | 14.0 | 1.5 | 15.5 | 9.3 | 1,750 | 98.6 |
| | No. 7 | 80.0 | 18.0 | 2.0 | 20.0 | 9.0 | 1,750 | 98.5 |
| | No. 8 | 70.0 | 27.0 | 3.0 | 30.0 | 9.0 | 1,750 | 98.0 |
| | No. 9 | 93.9 | 4.9 | 1.2 | 6.1 | 4.1 | 1,850 | 97.5 |
| | No. 10 | 80.0 | 16.0 | 4.0 | 20.0 | 4.0 | 1,750 | 97.7 |
| | No. 11 | 70.0 | 24.0 | 6.0 | 30.0 | 4.0 | 1,650 | 97.8 |
| Comparative example | No. 12 | 94.0 | 5.8 | 0.2 | 6.0 | 29.0 | 1,750 | 94.0 |
| | No. 13 | 80.0 | 19.1 | 0.9 | 20.0 | 21.2 | 1,750 | 93.2 |
| | No. 14 | 68.0 | 30.5 | 1.5 | 32.0 | 20.3 | 1,750 | 94.1 |
| | No. 15 | 68.0 | 29.0 | 3.0 | 32.0 | 9.7 | 1,650 | 94.3 |
| | No. 16 | 68.0 | 24.0 | 8.0 | 32.0 | 3.0 | 1,700 | 93.4 |
| | No. 17 | 80.0 | 15.0 | 5.0 | 20.0 | 3.0 | 1,750 | 94.2 |
| | No. 18 | 94.0 | 4.5 | 1.5 | 6.0 | 3.0 | 1,800 | 91.9 |
| | No. 19 | 94.0 | 5.5 | 0.5 | 6.0 | 11.0 | 1,850 | 89.0 |

TABLE 1(b)

| | Sample No. | Composition of sintered body | | Four point flexural strength ($kg/mm^2$) | | | Creep rate ($hr^{-1}$ 1,200°C | Crystals in sintered body* |
|---|---|---|---|---|---|---|---|---|
| | | $MgO+Al_2O_3$ (wt%) | $MgO/Al_2O_3$ (weight ratio) | Room temperature | 1,200°C | 1,400°C | | |
| Present invention | No. 1 | 6.1 | 18.6 | 73 | 63 | 45 | $6.2\times10^{-5}$ | SN, F |
| | No. 2 | 20.0 | 18.8 | 75 | 65 | 47 | $4.2\times10^{-5}$ | SN, F |
| | No. 3 | 30.0 | 18.9 | 74 | 68 | 48 | $3.6\times10^{-5}$ | SN, F |
| | No. 4 | 6.1 | 9.2 | 77 | 67 | 45 | $6.3\times10^{-5}$ | SN, MS, F |
| | No. 5 | 7.9 | 7.0 | 81 | 69 | 55 | $1.1\times10^{-5}$ | SN, MS, F |
| | No. 6 | 15.6 | 9.3 | 80 | 76 | 68 | $1.6\times10^{-5}$ | SN, MS, F |
| | No. 7 | 20.0 | 8.9 | 83 | 78 | 65 | $1.5\times10^{-5}$ | SN, MS, F |
| | No. 8 | 30.0 | 8.9 | 76 | 71 | 66 | $1.7\times10^{-5}$ | SN, MS, F |
| | No. 9 | 6.1 | 4.1 | 74 | 64 | 51 | $2.9\times10^{-5}$ | SN, MS |
| | No. 10 | 20.0 | 4.0 | 72 | 66 | 47 | $3.0\times10^{-5}$ | SN, MS |
| | No. 11 | 30.0 | 4.0 | 71 | 64 | 48 | $3.4\times10^{-5}$ | SN, MS |
| Comparative example | No. 12 | 6.0 | 28.7 | 68 | 42 | 24 | $6.2\times10^{-3}$ | SN |
| | No. 13 | 20.1 | 21.0 | 70 | 46 | 29 | $1.2\times10^{-3}$ | SN |
| | No. 14 | 32.2 | 20.1 | 65 | 44 | 27 | $3.4\times10^{-3}$ | SN |
| | No. 15 | 32.1 | 9.7 | 64 | 46 | 21 | $8.9\times10^{-3}$ | SN |
| | No. 16 | 32.0 | 3.0 | 58 | 43 | 13 | $5.9\times10^{-2}$ | SN, MS |
| | No. 17 | 20.0 | 3.0 | 55 | 41 | 10 | $9.0\times10^{-2}$ | SN, MS |
| | No. 18 | 6.0 | 3.0 | 51 | 43 | 18 | $9.2\times10^{-3}$ | SN |
| | No. 19 | 6.0 | 11.0 | 48 | 37 | 18 | $8.9\times10^{-3}$ | SN |

*SN: $Si_3N_4$ crystal F: forsterite crystal MS: magnesium sialon crystal

As seen from the results of Table 1 and Figure 4, in silicon nitride sintered bodies obtained in the production method of the present invention, at least one crystal of magnesium sialon crystal and forsterite crystal is always formed together with $Si_3N_4$ crystal, the four point flexural strength at 1,400°C in air is more than 390 MPa (40 kg/mm$^2$) and the creep rate at 1,200°C is less than $7\times10^{-5}$ hr$^{-1}$, while in the comparative examples, the strength at 1,400°C is less than 300 MPa (30 kg/mm$^2$) and the creep rate at 1,200°C is more than $1\times10^{-3}$ hr$^{-1}$ and therefore the degradation of the strength at high temperature in the present invention is low and the very excellent properties are obtained. Particularly, in No. 5, No. 6, No. 7 and No. 8 in the present invention, the strength at 1,400°C is very good, being as high as more than 490 MPa (50 kg/mm$^2$).

It is apparent that even when each of magnesium sialon crystal and forsterite crystal is present alone, satisfactory properties are developed but when both these crystals are present, the best strength and creep resistance at high temperature can be obtained.

Example 2

A ratio of x to y (x/y) of magnesium sialon crystal shown by the general formula

$$Mg_{x/2}Si_{6-y+x/2}Al_{y-x}O_yN_{8-y}$$

contained in the sample Nos. 4, 5, 6, 7 and 8 of the present invention in Example 1 was measured and the results obtained are shown in Table 2. The values for Comparative example Nos. 16 and 17 are also shown in Table 2.

TABLE 2

| | Sample No. | x/y | Strength at 1,400°C (kg/mm$^2$) |
|---|---|---|---|
| Present invention | No. 4 | 0.95 | 45 |
| | No. 5 | 0.96 | 55 |
| | No. 6 | 0.98 | 68 |
| | No. 7 | 0.91 | 65 |
| | No. 8 | 0.91 | 66 |
| Comparative example | No. 16 | 0.82 | 13 |
| | No. 17 | 0.76 | 10 |

As shown in Table 2, when magnesium sialon crystal having x/y of not less than 0.9 is present, the four point flexural strength at 1,400°C is higher than 390 MPa (40 kg/mm$^2$) while when x/y is less than 0.9, said strength is less than 200 MPa (20 kg/mm$^2$). Thus, it can be confirmed that the sintered bodies wherein x/y of magnesium sialon crystal is within the preferred limit of the present invention of not less than 0.9, have particularly high strength at high temperature.

To summarize, silicon nitride sintered bodies of the present invention contain the given amount and the given ratio of MgO and $Al_2O_3$ and at least one of magnesium sialon crystal and forsterite crystal as the second phase, and the amount of glass which is readily formed in the grain boundary of $Si_3N_4$ crystal is very small, so that sintered bodies having particularly excellent strength and creep resistance at high temperature can be easily and cheaply produced. These sintered bodies can be utilized for structural materials at high temperature, particularly high temperature turbine engine parts, high temperature ball bearings, various high temperature parts and the like.

**Claims**

1. A silicon nitride sintered body containing MgO and $Al_2O_3$ in a total amount of more than 6% by weight and not more than 30% by weight, characterised in that the weight ratio of $MgO/Al_2O_3$ is in the range 4 to 19 and the crystal content of the sintered body is essentially crystalline $Si_3N_4$ with at least one of crystalline magnesium sialon represented by the general formula

$$Mg_{x/2}Si_{6-y+x/2}Al_{y-x}O_yN_{8-y}$$

wherein $0<x\leq y<8$ and crystalline forsterite crystal represented by the formula $Mg_2SiO_4$ as a second phase,

the sintered body having a relative density of more than 95% and there being only a very small amount of glass or substantially no glass present.

2. A body as claimed in claim 1, wherein the ratio of x to y (x/y) in the general formula of the magnesium sialon is equal to or more than 0.9 but does not exceed 1.

3. A body as claimed in claim 1 or claim 2 having a four point flexural strength at 1,400°C in air of higher than 300 MPa (30 kg/mm$^2$).

4. A body as claimed in any one of claims 1 to 3 wherein the amount of glass present is less than 1% by weight.

5. A method for producing a silicon nitride sintered body, which comprises mixing a silicon nitride powder containing less than 2% by weight of oxygen with MgO and $Al_2O_3$ so that the total amount of MgO and $Al_2O_3$ is from 6% by weight to 30% by weight, and firing the resulting mixture at a temperature in the range 1,650°C to 1,850°C in nitrogen or an inert gas atmosphere, characterised in that the weight ratio of $MgO/Al_2O_3$ is in the range 4 to 19 and the crystal content of the sintered body produced is essentially crystalline $Si_3N_4$ with at least one of crystalline magnesium sialon represented by the general formula

$$Mg_{x/2}Si_{6-y+x/2}Al_{y-x}O_yN_{8-y}$$

wherein $0<x\leq y<8$ and crystalline forsterite crystal represented by the formula $Mg_2SiO_4$ as a second phase, the sintered body having a relative density of more than 95% and there being only a very small amount of glass or substantially no glass present in the sintered body.

6. A method as claimed in claim 5 wherein the silicon nitride powder has a content of metal impurities of less than 1% by weight, the content of $\alpha$-$Si_3N_4$ crystals being not less than 80% by weight, the BET specific surface area 2—50 m$^2$/g and the average grain size not greater than 5 µm.

**Patentansprüche**

1. Gesinterter Siliziumnitridkörper, der MgO und $Al_2O_3$ in einer Gesamtmenge von mehr als 6 Gew.-% und nicht mehr als 30 Gew.-% enthält, dadurch gekennzeichnet, daß das Gewichtsverhältnis von $MgO/Al_2O_3$ im Bereich von 4 bis 19 liegt und der Kristallgehalt des Sinterkörpers im wesentlichen kristallines $Si_3N_4$ mit mindestens einem kristallinen Magnesiumsialon der folgenden allgemeinen Formel

$$Mg_{x/2}Si_{6-y+x/2}Al_{y-x}O_xN_{8-y}$$

worin $0<x\leq y<8$ und kristalliner Forsterit der Formel $Mg_2SiO_4$ als zweite Phase ist und der Sinterkörper eine relative Dichte von mehr als 95% hat und nur eine sehr geringe Menge oder im wesentlichen kein Glas vorhanden ist.

2. Körper nach Anspruch 1, worin das Verhältnis von x zu y (x/y) in der allgemeinen Formel des Magnesiumsialons gleich oder mehr als 0,9 ist, aber 1 nicht übersteigt.

3. Körper nach Anspruch 1 oder 2 mit einer Vierpunkt-Biegefestigkeit bei 1400°C in Luft von mehr als 300 MPa (30 kg/mm$^2$).

4. Körper nach irgendeinem der Ansprüche 1 bis 3, worin die vorhandene Glasmenge kleiner als 1 Gew.-% ist.

5. Verfahren zum Herstellen eines gesinterten Siliziumnitridkörpers durch Vermischen eines Siliziumnitridpulvers, das weniger als 2 Gew.-% Sauerstoff enthält, mit MgO und $Al_2O_3$, so daß die Gesamtmenge an MgO und $Al_2O_3$ im Bereich von 6 bis 30 Gew.-% liegt und Glühen der erhaltenen Mischung bei einer Temperatur im Bereich von 1650°C bis 1850°C in Stickstoff oder einer Inertgas-Atmosphäre, dadurch gekennzeichnet, daß das Gewichtsverhältnis von $MgO/Al_2O_3$ im Bereich von 4 bis 19 liegt und der Kristallgehalt des hergestellten Sinterkörpers im wesentlichen kristallines $Si_3N_4$ mit mindestens einem kristallinen Magnesiumsialon der allgemeinen Formel

$$Mg_{x/2}Si_{6-y+x/2}Al_{y-x}O_yN_{8-y}$$

worin $0<x\leq y<8$ und kristallines Forsterit der Formel $Mg_2SiO_4$ als zweite Phase ist, wobei der Sinterkörper eine relative Dichte von mehr als 95% hat und in dem Sinterkörper nur eine sehr geringe Menge oder im wesentlichen kein Glas vorhanden ist.

6. Verfahren nach Anspruch 5, worin das Siliziumnitridpulver einen Gehalt an Metallverunreinigungen von weniger als 1 Gew.-% aufweist, der Gehalt an $\alpha$-$Si_3N_4$-Kristallen nicht geringer ist als 80 Gew.-%, die spezifische Oberfläche nach BET 2 bis 50 m$^2$/g beträgt und die mittlere Korngröße nicht größer ist als 5 µm.

**Revendications**

1. Corps fritté en nitrure de silicium contenant MgO et $Al_2O_3$ dans une quantité totale au-dessus de 6% en poids et non au-dessus de 30% en poids, caractérisé en ce que le rapport en poids de $MgO/Al_2O_3$ est dans l'intervalle de 4 à 9, et le contenu de cristal du corps fritté est essentiellement $Si_3N_4$ cristallin avec au moins un de sialon magnésium cristallin représenté par la formule générale

$$Mg_{x/2}Si_{6-y+x/2}Al_{y-x}O_yN_{8-y}$$

dans laquelle $0<x\leq y<8$ et de cristal de forstérite cristallin représenté par la formule $Mg_2SiO_4$ comme une seconde phase, le corps fritté ayant une densité relative au-dessus de 95% et ayant seulement une très petite quantité de verre ou sensiblement pas de verre présent.

2. Corps tel que revendiqué dans la revendication 1, dans lequel le rapport de x à y (x/y) dans la formule générale du sialon magnésium est égal à ou plus que 0,9 mais n'excède pas 1.

3. Corps tel que revendiqué dans les revendications 1 ou 2, ayant une résistance mécanique à la flexion en quatre points à 1,400°C dans l'air plus élevée que 300 MPa (30 kg/mm²).

4. Corps tel que revendiqué dans l'une quelconque des revendications 1 à 3, dans lequel la quantité de verre présente est au-dessous de 1% en poids.

5. Procédé pour produire un corps fritté en nitrure de silicium, qui consiste à mélanger une poudre de nitrure de silicium contenant moins de 2% en poids d'oxygéne avec MgO et $Al_2O_3$ afin que la quantité totale de MgO et $Al_2O_3$ soit de 6% en poids à 30% en poids, et cuire le mélange résultant à une température dans l'intervalle de 1.650°C à 1.850°C dans de l'azote ou une atmosphère de gaz inerte, caractérisé en ce que le rapport en poids de $MgO/Al_2O_3$ est dans l'intervalle de 4 à 19 et le contenu de cristal du corps fritté produit est sensiblement $Si_3N_4$ cristallin avec au moins un du sialon magnésium cristallin représenté par la formule générale

$$Mg_{x/2}Si_{6-y+x/2}Al_{y-x}O_yN_{8-y}$$

dans laquelle $0<x\leq y<8$ et du cristal de forstérite cristallin représenté par la formule $Mg_2SiO_4$ comme une seconde phase, le corps fritté ayant une densité relative au dessus de 95% et ayant seulement une très petite quantité de verre ou sensiblement pas de verre présent dans le corps fritté.

6. Procédé tel que revendiqué dans la revendication 5, dans lequel la poudre de nitrure de silicium a une teneur d'impuretés de métal au-dessous de 1% en poids, la teneur des cristaux $\alpha$-$Si_3N_4$ étant non au-dessous de 80% en poids l'aire de surface spécifique BET de 2—50 m³/g et la dimension de grains moyenne pas plus grande que 5 µm.

FIG. 1

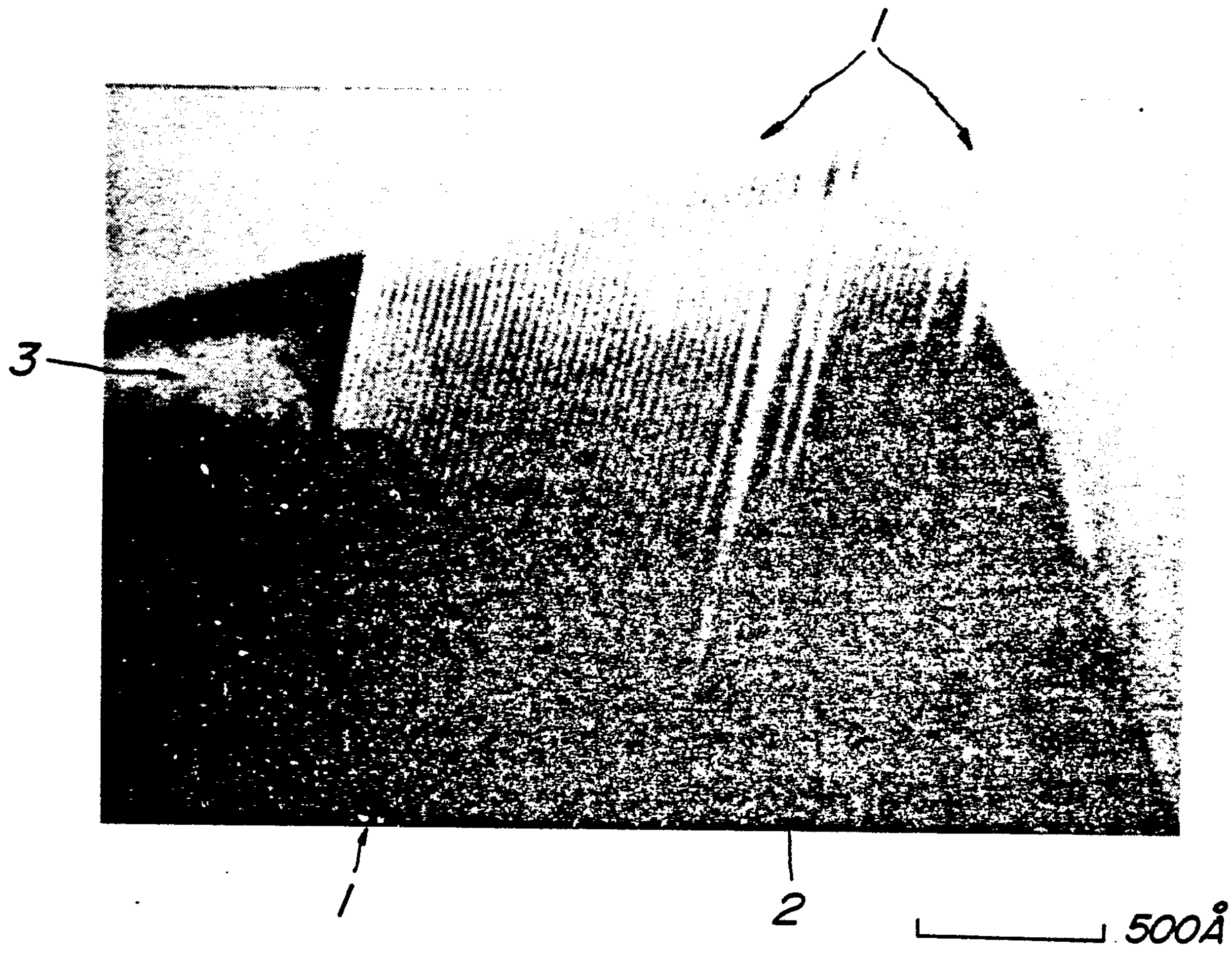

FIG_2

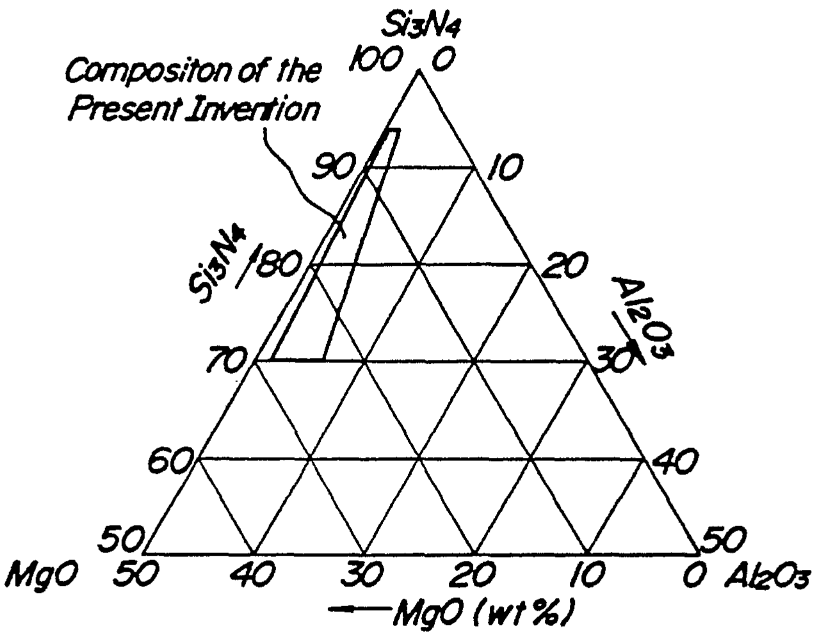
Si3N4
100 0
Compositon of the Present Invention
90
10
Si3N4 80
20
Al2O3
70
30
60
40
50
50
MgO 50 40 30 20 10 0 Al2O3
MgO (wt%)

FIG_3

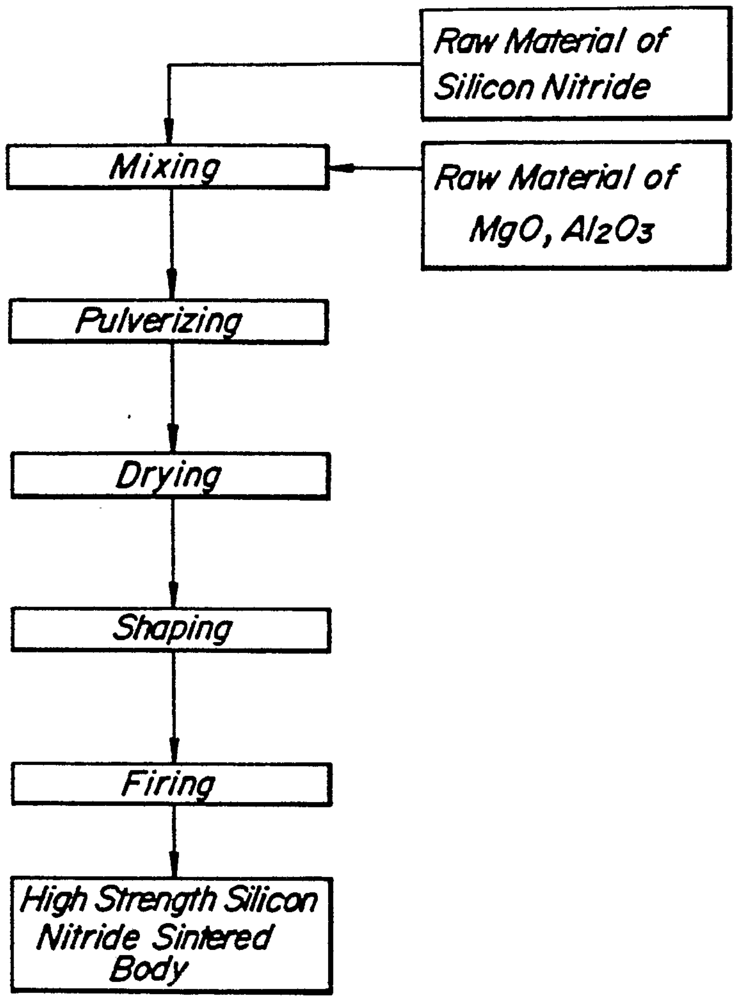
Raw Material of Silicon Nitride
Mixing
Raw Material of MgO, Al2O3
Pulverizing
Drying
Shaping
Firing
High Strength Silicon Nitride Sintered Body

FIG_4

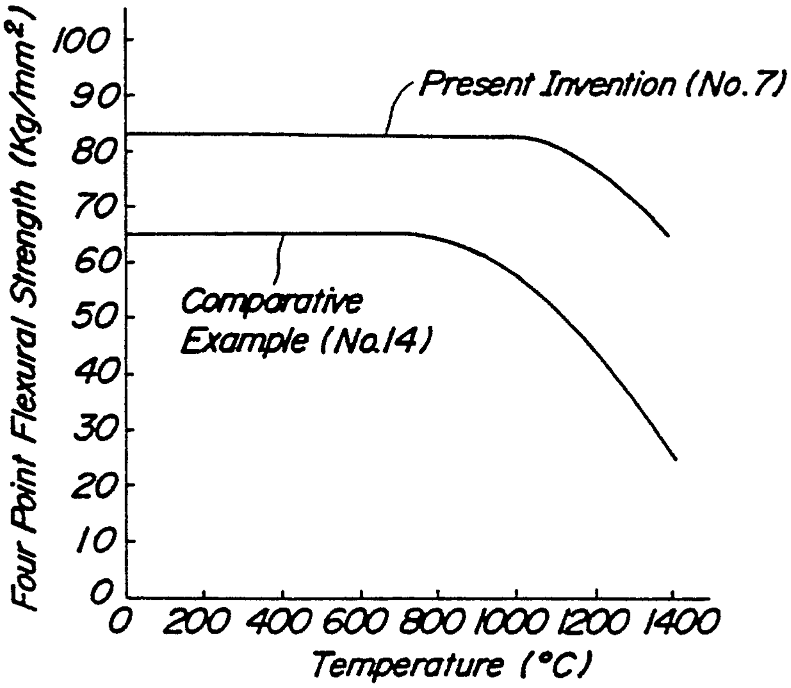
Four Point Flexural Strength (Kg/mm²)
100
90
80
70
60
50
40
30
20
10
0
Present Invention (No.7)
Comparative Example (No.14)
0 200 400 600 800 1000 1200 1400
Temperature (°C)